Europäisches Patentamt

European Patent Office

Office européen des brevets

(19)

(11) Publication number: **0 030 319**
**B1**

(12)                    **EUROPEAN PATENT SPECIFICATION**

(45) Date of publication of patent specification: **21.03.84**

(51) Int. Cl.³: **B 60 K 11/08, B 60 R 13/00**

(21) Application number: **80107352.9**

(22) Date of filing: **25.11.80**

(54) **Radiator grill.**

(30) Priority: **01.12.79 JP 165601/79 U**

(43) Date of publication of application:
**17.06.81 Bulletin 81/24**

(45) Publication of the grant of the patent:
**21.03.84 Bulletin 84/12**

(84) Designated Contracting States:
**DE FR GB**

(56) References cited:
**DE - A - 2 644 705**
**GB - A - 1 250 886**
**GB - A - 1 553 729**

(73) Proprietor: **NISSAN MOTOR COMPANY, LIMITED**
**No.2, Takara-cho, Kanagawa-ku**
**Yokohama-shi Kanagawa-ken 221 (JP)**

(72) Inventor: **Kurokawa, Yoshihisa**
**68, Oppamahigashi-cho 3-chome**
**Yokosuka-shi, Kanagawa-ken (JP)**
Inventor: **Inamoto, Hiroshi**
**917-43, Fukaya-cho Totsuka-ku**
**Yokohama-shi Kanagawa-ken (JP)**
Inventor: **Tanaka, Yoshinaka**
**6172-1, Hibarigaoka 4-chome**
**Fujisawa-shi Kanagawa-ken (JP)**

(74) Representative: **Patentanwälte Dipl.-Ing. A.**
**Grünecker, Dr.-Ing. H. Kinkeldey, Dr.-Ing. W.**
**Stockmair,**
**Dr. rer. nat. K. Schumann, Dipl.-Ing. P.H. Jakob,**
**Dr. rer. nat. G. Bezold Maximilianstrasse 58**
**D-8000 München 22 (DE)**

Courier Press, Leamington Spa, England.

## Radiator grill

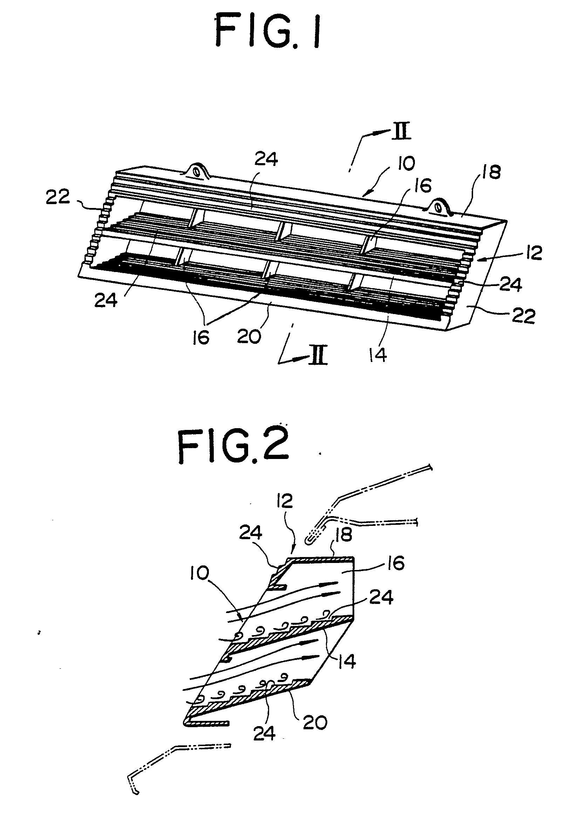

The invention relates to a radiator grill to be fitted at the front end of an automobile vehicle for covering the radiator and introducing atmospheric air therethrough, comprising a member which is subjected to air flow with a first surface facing the air flow and a second opposite surface facing the radiator, one of said surfaces being formed with ornamental notchings. A radiator grill of the type described above is already known and illustrated in Figures 1 & 2 of the specification. This prior art radiator grill comprises a frame member which shows a cross-bar member and a plurality of vertical members supporting the cross-bar member in parallel relationship to the frame member which is in substantially rectangular shape configuration in front elevation. On the front surface of an upper lateral portion as well as on a vertical portion of the frame member, there are formed decorative notchings for the purpose of improving the radiator grill's appearance. For the same purpose, on the upper surface of the cross-bar member and on the lower lateral portion of the frame member there are provided similar decorative notchings. These notchings extend along the horizontal or lateral edges of the upper and lower lateral portions of the frame member. This prior art radiator grill shows drawbacks in so far as the atmospheric air which flows through said radiator grill is interfering with said ornamental notchings resulting in the formation of voltexes in the intake air. Therefore, such a kind of conventional radiator grill has a relative low efficiency for introducing atmospheric air into the engine room which is located past the radiator grill. As a result the cooling performance is unfavourably effected.

With a view to sales promotion, the appearance of an automotive vehicle is one of its most important factors and in particular the front view of an automotive vehicle plays a very important role. Therefore, upon improving the above mentioned drawback which is eminent to the conventional radiator grill, the view point of appearance should be carefully taken into account.

The claimed invention aims to remedy the drawbacks of the conventional radiator grill without degrading its appearance.

In particular the inventive radiator grill distinguishes over the above discussed conventional radiator grill in that the frame member is formed of semi-transparent material and the ornamental notchings are formed in the second surface and are visible through the first surface.

The inventive radiator grill provides an improved intake air flow performance without degrading the grill's appearance. The inventive radiator grill allows for a smooth flow of the intake air and consequently avoids the generation of undesired intake air voltexes. In addition, since the inventive radiator grill is made of a semi-transparent material the notchings which are provided in the rear surface of the respective members are visible such that the inventive radiator grill is very close to the appearance of the prior art radiator grill. Generally speaking the inventive radiator grill has a first surface facing to the intake flow and a second surface facing the radiator. Said first surface is defined by a plane surface whereas said second surface is formed with the ornamental notchings thereof. Since at least the first surface of the inventive radiator grill is formed of a semi-transparent material, said ornamental notchings which are formed on the second surface are visible through said first surface.

Preferred embodiments and further improvements of the inventive radiator grill are described in the sub-claims.

One way of carrying out the invention is described in detail with reference to drawings which illustrate the conventional radiator grill and one specific embodiment of the invention, in which

Figure 1 is a perspective view of the conventional radiator grill,

Figure 2 is a sectional view of the radiator grill of Figure 1 taken along line II—2 of Figure 1,

Figure 3 is a perspective view of the preferred embodiment of the radiator grill according to the invention, which is viewed at the same point of that of Figure 1, and

Figure 4 is a sectional view of the radiator grill of Figure 3 taken along lines IV to IV of Figure 3.

Figs. 1 and 2 shows the conventional radiator grill 10 which comprises a frame member 12 which is of a substantially rectangular shaped configuration in front elevation, a cross-bar member 14 and a plurality of vertical member 16 supporting the cross-bar member 14 in parallel relationship with the lateral portions 18 and 20 of the frame member 12. On the front surface of the upper lateral portion 18 and vertical portions 22 of the frame member 12 substantially saw-tooth shaped notchings 24 for the purpose of improving the appearance are formed. For the same purpose, on the upper surfaces of the cross-bar member 14 and the lower lateral portion 20 of the frame member 12 substantially saw-tooth shaped notchings 24 are formed. As seen from Fig. 2, the shape of the notchings 24 are substantially the same configurations extending along the horizontal or lateral edges of the upper and lower lateral portions 18 and 20 of the frame member 12.

It will be appreciated that the shape of the frame should be adapted to the front end opening of the vehicle body and may not be limited to the specific form illlustrated herewith. Also the number of the cross-bar members to be provided can be more than one. Therefore, the improvement effected to the conventional radiator grill specifically illustrated hereabove should not be understood to be limitative of the specific shape thereof.

Returning to Fig. 2, the radiator grill 10 as illustrated above encountered some drawbacks which need to be remedied. Namely, as shown in Fig. 2, the atmospheric air introduced into the interior of the engine room is interfered with whilst flowing past the notching. By interference of the atmospheric air flow, voltex of intake air is generated to decrease efficiency of air intake. As a result of this, said radiator cannot be cooled so effectively by the intake air as required thereto.

On the other hand, it will be advisable for better understanding of the advantages accomplished by the present invention to note that, for the automotive vehicle, the appearance thereof is one of the important factors, particularly important is the front view of the automotive vehicle.

Therefore, upon improving the above-mentioned remaining drawback in the conventional radiator grill, the matter concerning the appearance should be carefully taken into account. The present invention has been, therefore, proposed for improving the above-mentioned drawback in the conventional construction of the radiator grill without degrading the appearance thereof and thus without degrading the appearance of the vehicle.

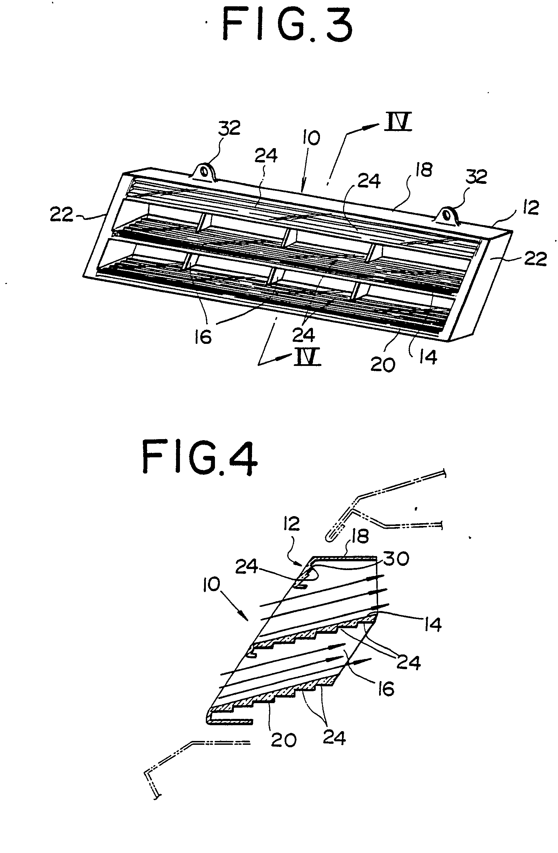

Referring to Figs. 3 and 4,

a preferred embodiment of the radiator grill according to the present invention is illustrated. It should be noted that, for simplification of the description given hereafter, features corresponding to the features of the foregoing example are represented by the same reference numerals. In Fig. 3, the radiator grill 10 comprises the frame member 12, cross-bar member 14 and a plurality of the vertical members 16. The frame member 12, cross-bar member 14 and the vertical members 16 are made of synthetic resin or the like, and are formed integrally. The upper and lower lateral portions 18 and 20 and the cross-bar member 14 are inclined upwardly towards the respective inner ends thereof. The upper lateral portion is provided with a vertically bent portion extending downwardly from the outer end thereof. The lower lateral portion 20 and the cross-bar member 14 are inwardly turned portions forming substantially U-shaped ends at the outer ends thereof. The whole parts of the radiator grill 10 are semitransparent so that respective opposite surfaces can be viewed therethrough.

On the inner surfaces 30 of the upper lateral portion 18 of the vertical portions of the frame member 12 substantially saw-tooth shaped notchings 24 are formed. Likewise, on the lower surfaces of the lower lateral portion 20 of the frame member 12 and the cross-bar member 14 substantially saw-tooth shaped notchings 24 of the same configuration as the same formed on the upper lateral portion and vertical portions of the frame member 12 are formed. As seen from Fig. 3, the notchings 24 thus formed can be viewed from the front side of the vehicle through each semi-transparent part of the radiator grill 10.

The radiator grill thus constructed is secured to the front end of the vehicle by a known securing means such as a screw or bolt passing through a bracket 32 protruding on the upper surface of the frame member 12.

The radiator grill according to the present invention permits a smooth flowing of the intake air therethrough without interfering air flow and generating voltex of air thereabout. In addition, according to the present invention, since the radiator grill is made of a semitransparent material and the notchings are provided only on such parts of the radiator grill where they do not interfere with the air flow, the appearance of the radiator grill can be kept the same as the conventional ones without having the drawbacks thereof.

## Claims

1. A radiator grill (10) to be fitted on the front end of an automobile vehicle for covering the radiator and introducing atmospheric air therethrough, comprising a frame member (12, 14, 20) which is subjected to an air flow with a first surface facing the air flow and a second opposite surface facing the radiator, one of said surfaces being formed with ornamental notchings (24), characterised in that the member (12, 14, 20) is formed of semi-transparent material and the ornamental notchings (24) are formed in the second surface and are visible through the first surface.

2. The radiator grill as set forth in claim 1, characterised in that said ornamental notchings (24) are formed in saw-tooth form projecting in horizontal direction.

3. The radiator grill as set forth in claim 1 or 2, characterised in that said member comprises a frame (12) and a cross member (14) extending horizontally, at least the horizontal parts (18, 20) of said frame (12) and said cross member (14) being tilted to raise their inner ends with respect to a horizontal plane; said second surface being formed at the lower surface of these tilted sections and cross member.

4. The radiator grill as set forth in claim 3, characterised in that said frame (12) and said cross member (14) has downwardly bent sections at their front ends, so that they split the air flow flowing along said second surfaces otherwise.

5. The radiator grill as set forth in claim 2, characterised in that each of said saw-tooth shaped projections comprises first and second sections, said first sections being located front side relative to said second section and having a tilting angle with respect to the horizontal plane smaller than said second section.

6. The radiator grill as set forth in claim 4, characterised in that said downwardly bent sections are located in front of said notchings (24).

7. The radiator grill as set forth in one of claims 1—6, characterised in that said frame member (12) has upper and lower horizontal panels (18, 20) as well as a cross member (14) extending between upper and lower panels and parallel therewith.

## Revendications

1. Une grille de radiateur (10) à fixer à l'extrémité avant d'un véhicule automobile pour couvrir le radiateur et introduire l'air atmosphérique à travers elle, comprenant un organe d'encadrement (12, 14, 20) qui est soumis à un écoulement d'air avec une première surface faisant face à l'écoulement d'air et une seconde surface opposée faisant face au radiateur, l'une desdites surfaces ayant des entaillages décoratifs (24), caractérisée en ce que l'organe (12, 14, 20) est formé en une matière semitransparente et les entaillages décoratifs (24) sont formés dans la seconde surface et sont visibles à travers la première surface.

2. La grille de radiateur selon la revendication 1, caractérisée en ce que lesdits entaillages décoratifs (24) sont en forme de dent de scie faisant saillie en direction horizontale.

3. La grille de radiateur selon la revendication 1 ou 2, caractérisée en ce que ledit organe comprend un encadrement (12) et un organe transversal (14) s'étendant horizontalement, au moins les parties horizontales (18, 20) dudit encadrement (12) et ledit organe transversal (14) étant basculés pour élever les extrémités internes par rapport à un plan horizontal; ladite seconde surface étant formée à la plus basse surface de ces sections et de l'organe transversal basculés.

4. La grille de radiateur selon la revendication 3, caractérisée en ce que ledit encadrement (12) et ledit organe transversal (14) a des sections courbées vers le bas aux extrémités avant, de façon à diviser l'écoulement d'air s'écoulant le long desdites secondes surfaces autrement.

5. La grille de radiateur selon la revendication 2, caractérisée en ce que chacune desdites protubérances en forme de dent de scie comprend des premières et secondes sections, lesdites premières sections étant placées du côté avant par rapport à ladite second section et ayant un angle de basculement par rapport au plan horizontal plus petit que ladite seconde section.

6. La grille de radiateur selon la revendication 4, caractérisée en ce que lesdites sections courbées vers le bas sont placées à l'avant desdits entaillages (24).

7. La grille de radiateur selon l'une quelconque des revendications 1 à 6, caractérisée en ce que ledit organe d'encadrement (12) a des panneaux horizontaux supérieur et inférieur (18, 20) ainsi qu'un organe transversal (14) s'étendant entre les panneaux supérieur et inférieur et parallèle à eux.

## Patentansprüche

1. Kühlergrill (10) zum Einbau in das vordere Ende eines Kraftfahrzeuges zum Abdecken des Kühlers und zum Einbringen von atmosphärischer Luft mit einem Rahmen (12, 14, 20), welcher einer Luftströmung mit einer ersten, der Luftströmung zugewandten Oberfläche ausgesetzt ist und einer zweiten, gegenüberliegenden Oberfläche, welche dem Kühler zugewandt ist, wobei eine dieser Oberflächen mit dekorativen Kerben (24) versehen ist, dadurch gekennzeichnet, daß der Rahmen (12, 14, 20) aus einem semi-transparenten Werkstoff geformt ist und daß die dekorativen Kerben (24) in der zweiten Oberfläche ausgebildet und durch die erste Oberfläche hindurchbewegbar sind.

2. Kühlergrill nach Anspruch 1, dadurch gekennzeichnet, daß die dekorativen Kerben (24) sägezahnförmig gestalten sind und in Horizontalrichtung vorstehen.

3. Kühlergrill nach Anspruch 1 oder 2, dadurch gekennzeichnet, daß der Rahmen ein Rahmenteil (12) und ein sich im wesentlichen horizontal erstreckendes Querglied (14) umfaßt, wobei wenigstens did horizontalen Abschnitte (18, 20) des Rahmenteils (20) sowie des Quergliedes (14) geneigt angeordnet sind, um die inneren Enden derselben in bezug auf eine Horizontalebene anzuheben, wobei die zweite Oberfläche an der unteren Oberfläche dieser geneigten Abschnitte und des Quergliedes ausgebildet ist.

4. Kühlergrill nach Anspruch 3, dadurch gekennzeichnet, daß das Rahmenteil (12) und das Qurglied (14) nach unten gebogene Abschnitte an ihren vorderen Enden aufweisen, so daß diese den Luftstrom zerteilen, welcher sonst längs der zweiten Oberflächen strömen würde.

5. Kühlergrill nach Anspruch 2, dadurch gekennzeichnet, daß jeder der sägezahnförmigen Vorsprünge erste und zweite Abschnitte aufweist, wobei die ersten Abschnitte frontseitig in bezug auf die zweiten Abschnitte angeordnet sind und einen Neigungswinkel gegenüber der Horizontalebene aufweisen, welcher geringer ist als derjeniger der zweiten Abschnitte.

6. Kühlergrill nach Anspruch 4, dadurch gekennzeichnet, daß die nach unten gebogenen Abschnitte vor den Kerben (24) angeordnet sind.

7. Kühlergrill nach einem der Ansprüche 1 bis

**0 030 319**

6, dadurch gekennzeichnet, daß das Rahmenteil (12) obere und untere horizontale Paneele (18, 20) sowie ein Querglied (14) aufweisen, welches sich zwischen dem oberen und dem unteren Paneel und parallel dazu erstreckt.

# FIG. I

# FIG.2

# FIG.3

# FIG.4